(19) Europäisches Patentamt
European Patent Office
Office européen des brevets

(11) Numéro de publication : **0 558 357 A1**

# (12) DEMANDE DE BREVET EUROPEEN

(21) Numéro de dépôt : **93400110.8**

(22) Date de dépôt : **18.01.93**

(51) Int. Cl.[5] : **A01N 37/44,** // (A01N37/44, 33:04)

(30) Priorité : **28.02.92 FR 9202410**

(43) Date de publication de la demande :
**01.09.93 Bulletin 93/35**

(84) Etats contractants désignés :
**ES IT SE**

(71) Demandeur : **PETERS S.A.**
**Z.I., Les Vignes ,42 rue Benoit Frachon**
**F-93000 Bobigny (FR)**

(72) Inventeur : **Kassentini, Philippe**
**2, allée des Forsythias, Domaine du Parc**
**F-05230 Soissy Sous Montmorency (FR)**

(74) Mandataire : **Phélip, Bruno et al**
**c/o Cabinet Harlé & Phélip 21, rue de La Rochefoucauld**
**F-75009 Paris (FR)**

## (54) Composition bactéricide pour la désinfection de contact, notamment en milieu hospitalier.

(57) Composition bactéricide pour la désinfection de contact en milieu hospitalier comprenant : a) un composé amphotère sur lequel sont greffés des groupes ammonium quaternaires répondant à la formule générale :

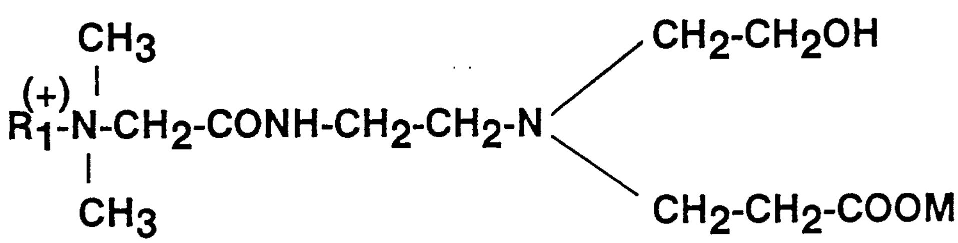

dans laquelle $R_1$ représente une chaîne d'acide gras saturé ou non saturée, et M est un métal alcalin et en quantité synergique un composé (b) de formule générale

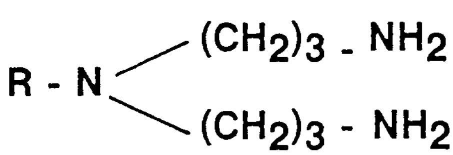

dans laquelle R est un radical alkyle en $C_8$ à $C_{20}$, le rapport pondéral de (b) :(a) étant de 0,5 à 6 et voisin de 1,5.

EP 0 558 357 A1

La présente invention concerne une composition bactéricide pour la désinfection de contact notamment en milieu hospitalier.

Une caractéristique de la présente composition bactéricide est qu'elle est dépourvue d'aldéhydes et de phénols.

FR-A-90.12.035 de la demanderesse, déposée le 28 Septembre 1990 pour "Composition d'agent nettoyant-décontaminant, notamment pour instruments chirurgicaux", décrit une composition qui renferme à titre de produit actif d'une part un composé amphotère sur lequel sont greffés des groupes ammonium quaternaires et d'autre part un composé cationique ammonium quaternaire.

Le composé amphotère est plus particulièrement la N[N'(N"-2-hydroxyéthyl- N"-carboxyéthylaminoéthyl)-amidoacétate] - N,N-diméthyl-N-coco-ammoniumbétaïne, tandis que le composé cationique est de préférence le chlorure de didécyldiméthylammonium.

La composition de la présente invention est destinée à être appliquée sur des surfaces inertes et n'est pas un produit destiné à être appliqué sur le corps humain.

Cette composition présente de nombreux avantages par rapport aux compositions de la technique antérieure.

Elle ne comporte pas de produits toxiques et sa mise en oeuvre est très aisée.

Son prix de revient est peu important et surtout son efficacité est bien supérieure à celle des produits connus jusqu'à ce jour.

Selon la présente invention on a trouvé, de façon surprenante, qu'en combinant un composé amphotère, sur lequel sont greffés des groupes ammonium quaternaires, à une chaîne carbonée renfermant un groupe dipropylène triamine de formule

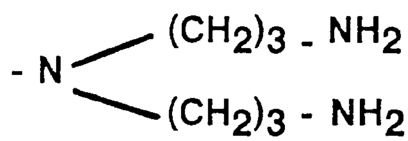

on obtenait une composition bactéricide à effet amélioré.

Plus particulièrement, la présente invention a pour objet une composition bactéricide pour la désinfection de contact en milieu hospitalier comprenant: (a) un composé amphotère sur lequel sont greffés des groupes ammonium quaternaires, répondant à la formule générale:

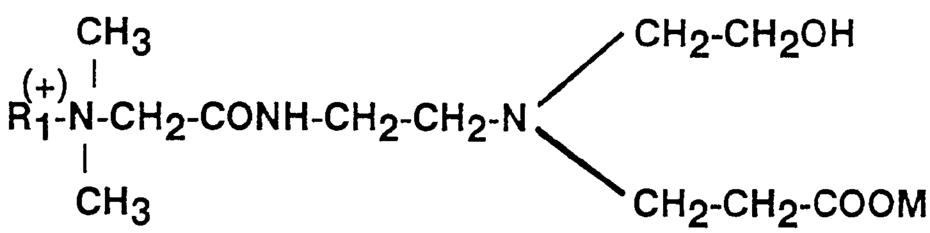

dans laquelle $R_1$ représente une chaîne d'acide gras saturé ou non saturé et M est un métal alcalin et, en quantité synergique, (b) un composé ce formule

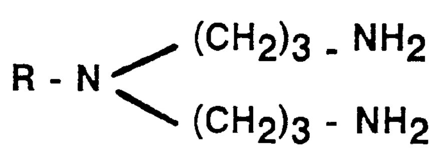

dans laquelle R est un radical alkyle en $C_8$ à $C_{20}$, le rapport pondéral de (b):(a) étant de 0,5 à 6 et voisin ce 1,5.

Dans la présente invention le composé (b) représente généralement de 0,1 à 30%, de préférence, de 0,5 à 20% du poids total de la composition.

La composition de la présente invention peut comprendre également (c) au moins un alcanol inférieur.

La composition de l'invention peut comporter aussi un composé (d) de formule générale

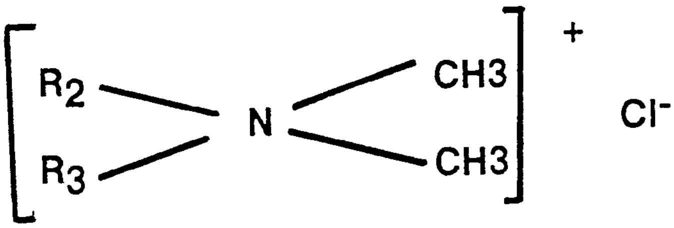

dans laquelle $R_2$ et $R_3$ sont des groupes alkyles en $C_1$ à $C_{15}$.

Le composé (c) lorsqu'il est présent est utilisé à raison de 5 à 50%, ce préférence, de 10 à 30% du poids total de la composition.

Le composé (d) lorsqu'il est présent est utilisé à raison de 0,1 à 30%, de préférence, de 0,2 à 20% du poids total de la composition.

Le composé (b) est avantageusement la N,N-bis-(3-aminopropyldodécylamine).

L'alcanol inférieur (composant (c)) est de préférence l'éthanol ou l'isopropanol ou un mélange de ceux-ci.

Le composé (d) est avantageusement le chlorure de didécyl-diméthylammonium.

Le composé (a) préféré est la N[N'(N"-2-hydroxyéthyl-N"-carboxyéthylaminoéthyl)-amidoacétate]-N,N-diméthyl-N-cocoammonium bétaïne.

Pour permettre sa formulation, la composition de l'invention peut encore contenir de l'eau déminéralisée.

La composition selon la présente invention est le plus commodément présentée sous la forme d'un produit à pulvériser.

Sauf indication contraire, toutes les parties et pourcents sont calculés en poids.

On indique ci-après un exemple de mise en oeuvre préféré de la composition de l'invention, les quantités indiquées étant exprimées en pour-cent de la composition totale:

- N[N'(N"-2-hydroxyéthyl-N"-carboxyéthylamino-éthyl)-amidoacétate]-N,N-diméthyl-N-coco-ammonium bétaïne 0,3 %
- N-N bis(3-aminopropyldodécylamine) 2 %
- Ethanol-isopropanol 30 %
- Chlorure de didécyl-diméthylammonium 0,2 %
- Eau déminéralisée quantité suffisante pour obtenir 100 %

La composition ci-dessus est obtenue en mélangeant les composés dans l'ordre mentionné sous agitation modérée pendant une durée de deux heures environ.

La N[N'(N"-2-hydroxyéthyl-N"-carboxyéthylamino-éthyl)amidoacétate]-N,N-diméthyl-N-coco-ammonium bétaïne est un liquide limpide jaunâtre à 20°C. Elle présente les caractéristiques ci-après:

couleur (Gardner): 3-5
matières solides (%): 50 ± 1
pH (à 10%): 8-9
teneur en NaCl (%): 5,5-6,2
teneur en éthanol:(%) environ 10
caractère cationique.

Il s'agit d'un tensio-actif amphotère cationique ayant à la fois la bonne compatibilité envers la peau des amphotères et l'effet biocide des quaternaires.

Ce tensio-actif est compatible avec les tensio-actifs non ioniques et amphotères et est partiellement miscible avec les tensio-actifs cationiques. Il est soluble ce façon limpide dans l'eau, l'éthanol, l'isopropanol. Son domaine d'utilisation est pH 4-10. Sa valeur moussante selon la norme DIN 53901 est de 180/O et son pouvoir mouillant selon la norme DIN 53901 est de 1 minute 4 secondes.

La N,N-bis(3-aminopropyldodécylamine) est un liquide incolore à jaune clair, son odeur est ammoniacale, sa densité est de 0,967. La solution renferme environ 70% d'eau et son pH est voisin de 11. Son indice de réfraction est ce 1,379.

Le chlorure de didécyldiméthylammonium est dépourvu de noyaux phényliques et comporte deux chaînes hydrocarbonées en $C_{10}$ reliées à l'atome central.

L'alcanol inférieur est habituellement un mélange d'éthanol ou d'isopropanol. Toutefois, on peut utiliser un seul alcool ou plus de deux alcools si cela est nécessaire.

L'activité anti-microbienne de la composition bactéricide de la présente invention a été mise en évidence selon les normes AFNOR.

Les normes AFNOR sont respectivement:

- NFT 72 151: détermination de l'activité bactéricide, spectre 5, méthode par filtration sur membranes

- NFT 72 171: détermination de l'activité bactéricide en présence d'une substance interférente de référence (mélange albumine-extrait de levure), méthode par filtration sur membranes
- NFT 72-190: détermination de l'activité bactéricide (méthode des porte-germes)
- NFT 72-201: détermination de l'activité fongicide, méthode par filtration sur membranes

A) Détermination de l'activité bactéricide selon la norme AFNOR 72 151 (méthode par filtration sur membranes) :

1) Conditions expérimentales

Température d'essai: 20°C ± 1°C
Diluant du produit: eau distillée stérile

2) Mode opératoire déterminé à la suite de l'essai préliminaire:

. Référence et nature des membranes:
SARTORIUS 13906-47 ACN, nitrate de cellulose, porosité 0,45 µm, blanches, quadrillées
SARTORIUS 13006-47 ACN, nitrate de cellulose, porosité 0,45 µm, noires, quadrillées pour Enterococcus hirae

. Liquide de lavage des membranes:
Nature: eau distillée additionnée de 0,5% (v/v) de Tween 80.
Mode de préparation: autoclavage à 121°C pendant 25 minutes.
Nombre de lavages avec ce liquide: 3
Volume de liquide utilisé pour chaque lavage: 100 ml

. Neutralisant(s) ajouté(s) au milieu de dénombrement et concentration(s): 0,5% (v/v de Tween 80) 0,72 ‰ (p/v) de lécithine
Autres additions au milieu de dénombrement et milieu de dénombrement particulier:
0,0025% (p/v) de chlorure de triphényltétrazolium pour une meilleure visualisation des colonies

3) Résultats des essais préliminaires dans les conditions décrites

TABLEAU I

| Concentrations essayées du produit de l'invention | Souches collection d'origine et numéro dans la collection | N | N' | n |
|---|---|---|---|---|
| 90% (v/v) | Pseudomonas aeruginosa CIP A22 | 81 | 96 | 81 |
| 90% (v/v) | Escherichia coli CIP 54 127 | 124 | 106 | 76 |
| 90% (v/v) | Staphylococcus aureus CIP 53 154 | 117 | 105 | 117 |
| 90% (v/v) | Enterococcus hirae CIP 58 55 | 115 | 95 | 75 |
| 90% (v/v) | Mycobacterium smegnatis CIP 73 26 | 106 | 100 | 103 |

N : contrôle inoculum

N' : témoin filtration

n : condition expérimentales

Les essais préliminaires sont validés si N,N' et n sont peu différents.

La composition du liquide de lavage des membranes et le mode de lavage des membranes sont validés sur les 5 souches bactériennes pour toutes concentrations du produit de l'invention non supérieures à 90% v/v).

TABLEAU II

4) Essai proprement dit

Résultats expérimentaux:

| Souches, collection d'origine et numéro dans la collection | N | n | N' | X Concentration en pourcentage (v/v) au contact avec les microorganismes | | | | | pH | |
|---|---|---|---|---|---|---|---|---|---|---|
| | | | | 10 | 30 | 50 | 70 | 90 | Cmin. | Cmax |
| Pseudomonas aeruginosa CIP A22 | 81 | 81 | 96 | 0 | 0 | 0 | 0 | 0 | 9,9 | 10,6 |
| Escherichia coli CIP 54 127 | 124 | 76 | 106 | 0 | 0 | 0 | 0 | 0 | 9,8 | 10,3 |
| Staphylococcus aureus CIP 53 154 | 117 | 117 | 105 | 0 | 0 | 0 | 0 | 0 | 9,6 | 10,5 |
| Enterococcus hirae CIP 58 55 | 115 | 75 | 95 | 0 | 0 | 0 | 0 | 0 | 9,7 | 10,5 |
| Mycobacterium smegmatis CIP 73 26 | 106 | 103 | 100 | 0 | 0 | 0 | 0 | 0 | 9,9 | 10,5 |

N : contrôle inoculum
N': témoin filtration
n : conditions expérimentales

X : essai
+ : plus de 150 colonies

Sont bactéricides les concentrations pour lesquelles:
X est inférieur ou égal à N', si N, N' et n sont peu différents.

CONCLUSION:

Le produit de l'invention présente à 20°C une activité bactéricide spectre 5 en eau distillée conforme à la norme AFNOR NF T 72-151.

B) Détermination de l'activité bactéricide en présence d'une substance interférente de référence selon la norme NF T 72-171, mélange albumine-extrait de levure (méthode par filtration sur membranes)

1) Conditions expérimentales

Température d'essai: 20°C + 1°C
Diluant du produit: eau distillée stérile
Substance interférente: protéines, mélange albumine bovine 1% + extrait de levure 1%
Stabilité en présence du produit: absence de précipité

2) Mode opératoire déterminé à la suite de l'essai préliminaire

Nature des membranes et référence
Sartorius 13 906-47 ACN, nitrate de cellulose, porosité 0,45 µm, blanches, quadrillées.
Liquide de lavage des membranes:
nature: eau distillée additionnée de 0,5% (v/v) de Tween 80,
eau distillée additionnée de 5% (v/v) ce Tween 80 et
0,3% (p/v) de lécithine d'oeufs pour Escherichia coli
Mode de préparation: autoclavage à 121°C pendant 25 minutes
Nombre de lavages avec ce liquide: 5
Volume de liquide utilisé pour chaque lavage: 100 ml
Neutralisants ajoutés au milieu de dénombrement et concentrations:
0,5 % (v/v) de Tween 80,
0,072% (p/v) de lécithine d'oeuf.
Autres additions au milieu de dénombrement et milieux de dénombrements particuliers:
0,0025% (p/v) de chlorure de triphényltétrazolium, pour une meilleure visualisation des colonies
Pour Enterococcus hirae, utilisation d'un milieu gélosé à la bile, l'esculine et le nitrure de sodium (Biokar OBK 016) qui noircit en présence d'entérocoques.

3) Résultats des essais préliminaires dans les conditions décrites

TABLEAU III

| Concentrations essayées du produit de l'invention | Souches collection d'origine et numéro dans la collection | N | N' | n |
|---|---|---|---|---|
| 10% (v/v) | Pseudomonas aeruginosa CIP A22 | 54 | 83 | 79 |
| 15% (v/v) | Escherichia coli CIP 54 127 | 90 | 78 | 56 |
| 10% (v/v) | Staphylococcus aureus CIP 53 154 | 148 | 149 | 94 |
| 10% (v/v) | Enterococcus hirae CIP 58 55 | 132 | 122 | 107 |
| N : contrôle inoculum<br>N' : témoin filtration<br>n : conditons expérimentales | | | | |

Les essais préliminaires sont validées si N,N' et n sont peu différents.

La composition du liquide de lavage des membranes et le mode de lavage des membranes sont validés sur la souche d'Escherichia coli pour toutes concentrations du produit de l'invention non supérieures à 15% (v/v) et pour les 3 autres souches bactériennes pour toutes concentrations non supérieures à 10% (v/v).

TABLEAU IV

4) Essai proprement dit

Résultats expérimentaux

| Souches, collection d'origine et numéro dans la collection | N | N' | n | X Concentration en pourcentage (v/v) au contact avec les microorganismes | | | | | pH | |
|---|---|---|---|---|---|---|---|---|---|---|
| | | | | 1,0 | 2,5 | 5,0 | 7,5 | 10,0 | Cmin. | Cmax |
| Pseudomonas aeruginosa CIP A22 | 54 | 83 | 79 | + | + | + | 1 | 0 | 7,1 | 7,7 |
| Staphylococcus aureus CIP 53 154 | 148 | 149 | 94 | + | + | + | + | 5 | 7,0 | 7,8 |
| Enterococcus hirae CIP 58 55 | 132 | 122 | 107 | + | + | + | + | 0 | 7,1 | 7,6 |
| | | | | 5,0 | 7,5 | 10,0 | 12,5 | 15,0 | | |
| Escherichia coli CIP 54 127 | 90 | 78 | 56 | + | + | 58 | 0 | 0 | 7,4 | 8,0 |

N : contrôle inoculum
N': témoin filtration
n : conditions expérimentales

X: essai
+: plus de 150 colonies

Sont bactéricides les concentrations pour lesquelles: X est inférieur ou égal à N', si N, N' et n sont peu différents.

Le produit de l'invention présente à 20°C une activité bactéricides spectre 4 en présence d'un mélange d'albumine et d'extrait de levure, conforme à la norme AFNOR NF T 72-171.

C) Détermination de l'activité bactéricide selon la norme AFNOR NF-T 72-190

Méthode des porte-germes:

1) Conditions expérimentales

Nature et caractéristiques ces porte-germes utilisés:
Verres de montre, de 40 mm de diamètre, de 58 mm de rayon de courbure et de 3,5 mm de hauteur
Temps de séchage des porte-germes après dépôt de l'inoculum: 45 minutes
Temps de contact produit-inoculum: 15 minutes
Quantité de désinfectant déposée sur chaque porte-germes: 0,2 ml
Température ambiante pendant les essais: 20°C environ
Référence et nature des membranes utilisées:
Sartorius 13 906-47 ACN, nitrate de cellulose, porosité 0,45 μm, blanches, quadrillées
Sartorius 13 006-47 ACN, nitrate de cellulose, porosité 0,45 μm, noires, quadrillées (pour Enterococcus hirae)
Liquide de lavage des membranes:
nature: eau distillée additionnée de 0,5% (v/v) de Tween 80
mode de préparation: autoclavage à 121°C pendant 25 minutes
nombre de lavages avec ce liquide: 3 (5 pour Escherichia coli)
volume de liquide utilisé pour chaque lavage: 100 ml
Neutralisant(s) ajouté(s) au milieu de dénombrement et concentrations(s)
lécithine à 0,7‰ (p/v)
Tween 80 à 0,5 ‰ (v/v)
Autres additions au milieu de dénombrement et milieux de dénombrements particuliers:
0,0025 % (p/v) de chlorure de triphényl tétrazolium, pour une meilleure visualisation des colonies.

2) Résultats des essais préliminaires dans les conditions décrites

TABLEAU V

| Concentrations essayées du produit de l'invention | Souches collection d'origine et numéro dans la collection | $N_1$ | $n_1$ |
|---|---|---|---|
| 100% | Pseudomonas aeruginosa<br>CIP A 22 | 146 | 131 |
| 100% | Escherichia coli<br>CIP 54 127 | 56 | 41 |
| 100% | Staphylococcus aureus<br>CIP 53 154 | 130 | 128 |
| 100% | Enterococcus hirae<br>CIP 58 55 | 106 | 94 |
| 100% | Mycobacterium smegmatis<br>CIP 73 26 | 104 | 108 |

$N_1$ : contrôle inoculum

$n_1$ : essai préliminaire (dénombrement des micro-organismes sur membranes ayant été au préalable en contact avec le produit

$N_1$ étant peu différent de $n_1$, les conditions expérimentales décrites sont applicables lors de l'essai proprement dit pour une concentration de produit de 100% sur les souches de bactéries testées.

Les essais préliminaires et les essais proprement dits ont été conduits en parallèle.

3) Essai proprement dit

Résultats expérimentaux:

Les rèsultats détaillés sont rapportés ci-après (Tableau VI):

TABLEAU VI

| Souches, collection d'origine et numéro dans la collection | T = inoculum témoin (moyenne de deux supports) | Concentrations essayées du produit | $n'_1$ | n'2 | d = taux de réduction |
|---|---|---|---|---|---|
| Pseudomonas aeruginosa CIP A22 | $21.10^5$ | 100% | 0 | 0 | dl = 6,3 logs |
| Escherichia coli CIP 54 127 | $16.10^5$ | 100% | 0 | 0 | $d_2$ = 6,2 logs |
| Staphylococcus aureus CIP 53 154 | $61.10^5$ | 100% | 0 | 0 | $d_3$ = 6,8 logs |
| Enterococcus hirae CIP 58 55 | $75.10^5$ | 100% | 0 | 0 | $d_4$ = 6,9 logs |
| Mycobacterium smegmatis CIP 73 26 | $18.10^5$ | 100% | 0 | 0 | $d_5$ = 6,3 logs |

T = nombre de bactéries par support témoin
$n'_1$ = nombre de bactéries retrouvées viables, rapport à 100 ml
$n'_2$ = nombre de bactéries viables autour ou sur le support, en inclusion en gélose
d = log T - log ($n'_1$ + $n'_2$); si $n'_1$ et $n'_2$ = 0, d = log T

Taux de déduction minimum exigé pour satisfaire à la norme AFNOR NF T 72-190
activité bactéricide > 5

Le produit de l'invention est bactéricide selon la norme AFNOR NF T 72-190 à la concentration de 100%, en 15 minutes de contact, à 20°C.

On a récapitulé dans le Tableau VII ci-après les résultats des essais selon la norme AFNOR NF T 72-190 pour la détermination de l'activité bactéricide du produit ce la présente invention.

B) Détermination de l'activité fongicide selon la norme AFNOR NF T 72-201 (méthode par filtration sur membranes, essai partiel)

1) Conditions expérimentales :

Température d'essai: 20°C ± 1%C
Temps de contact: 15 minutes
Diluant du produit utilisé lors des essais: eau distillée stérile

2) Mode opératoire déterminé à la suite de l'essai préliminaire

Référence et nature des membranes:
Sartorius 13 906-47 ACN, nitrate de cellulose, porosité 0,45 µm, blanches, quadrillées
Sartorius 13 006-47 ACN, nitrate de cellulose, porosité 0,45 µm, noires, quadrillées (pour Candida albicans)
Liquide de lavage des membranes:
Nature: eau distillée additionnée de 0,5 % (v/v) de Tween 80
Mode de préparation: autoclavage à 121°C pendant 25 minutes
Nombre de lavages avec ce liquide: 3
Volume de liquide utilisé pour chaque lavage: 100 ml
Neutralisant(s) ajouté(s) au milieu de dénombrement et concentrations (s):
0,5% (v/v) de Tween 80 et 0,7‰ (p/v) de lécithine d'oeuf.
Autres additions au milieu de dénombrement: (néant)

TABLEAU VII

| Souches, collection d'origine et numéro dans la collection | Dénombrements des microorganismes récupérés | Dénombrements essais | | | Dénombrements témoins | |
|---|---|---|---|---|---|---|
| | | E1 | E2 | E3 | T1 | T2 |
| Pseudomonas aeruginosa<br>CIP A 22 | 1 ml dilution $10^{-2}$<br>1 ml erlen<br>98,9 ml<br>porte-germes | 0<br>0<br>0<br>0 | 0<br>0<br>0<br>0 | 0<br>0<br>0<br>0 | 172 | 239 |
| Escherichia coli<br>CIP 54 127 | 1 ml dilution $10^{-2}$<br>1 ml erlen<br>98,9 ml<br>porte-germes | 0<br>0<br>0<br>0 | 0<br>0<br>0<br>0 | 0<br>0<br>0<br>0 | 161 | 154 |
| Staplylococcus aureus<br>CIP 53 154 | 1 ml dilution $10^{-2}$<br>1 ml erlen<br>98,9 ml<br>porte-germes | 0<br>0<br>0<br>0 | 0<br>0<br>0<br>0 | 0<br>0<br>0<br>0 | 70 | 52 |
| Enterococcus hirae<br>CIP 58 55 | 1 ml dilution $10^{-2}$<br>1 ml erlen<br>98,9 ml<br>porte-germes | 0<br>0<br>0<br>0 | 0<br>0<br>0<br>0 | 0<br>0<br>0<br>0 | 81 | 68 |
| Mycobacterium smegmatis<br>CIP 73 26 | 1 ml dilution $10^{-2}$<br>1 ml erlen<br>98,9 ml<br>porte-germes | 0<br>0<br>0<br>0 | 0<br>0<br>0<br>0 | 0<br>0<br>0<br>0 | 181 | 176 |
| + : plus de 150 colonies | | | | | | |

3) Résultats des essais préliminaires dans les conditions décrites:

TABLEAU VIII

| Concentrations essayées du produit de l'invention | Souches collection d'origine et numéro dans la collection | N | N' | n |
|---|---|---|---|---|
| 90 % (v/v) | Cladosporium cladosporioïdes<br>IP 1232-80 | 78 | 74 | 80 |
| 90 % (v/v) | Candida albicans<br>IP 1180-79 | 55 | 52 | 67 |
| 90 % (v/v) | Penicillium verrucosum var. cyclopium<br>IP 1231-60 | 128 | 143 | 125 |

N : contrôle inoculum

N' : témoin filtration

n : conditions expérimentales

Les essais préliminaires sont validés si N,N', et n sont peu différents.

La composition du liquide de lavage des membranes et le mode de lavage des membranes sont validés sur les 3 souches fongiques pour toutes concentrations du produit ce l'invention non supérieures à 90% (v/v).

TABLEAU IX

4) Essai proprement dit

Résultats expérimentaux

| Souches, collection d'origine et numéro dans la collection | N | N' | n | X Concentration en pourcentage (v/v) au contact avec les microorganismes | | | | | pH | |
|---|---|---|---|---|---|---|---|---|---|---|
| | | | | 10 | 25 | 50 | 75 | 90 | Cmin. | Cmax |
| Cladosporium cladosporioïdes IP 1232 80 | 78 | 74 | 80 | + | + | + | 0 | 0 | 9,5 | 10,5 |
| Candidas albicans IP 1180 79 | 55 | 52 | 67 | 13 | 0 | 0 | 0 | 0 | 9,1 | 10,4 |
| Penicillium verrucosum var.cyclopium IP 1231 80 | 128 | 143 | 125 | 1 | 0 | 0 | 0 | 0 | 9,2 | 10,3 |

N : contrôle inoculum
N' : témoin filtration
n : conditions expérimentales

x : essai
+ : plus de 150 colonies ou thalles

Sont fongicides les concentrations pour lesquelles:
X est inférieur ou égal à N', si N, N' et n sont peu différents.

Conclusion:

Le produit de l'invention présente à 20°C une activité fongicide en eau distillée conforme à la norme AFNOR NF T 72-201 sur les trois souches: Cladosporium cladosporioïdes IP 1232-80, Candida albicans IP 1180-79, Penicillium verrucosum var. Cyclopium IP 1231-80.

Le produit de l'invention peut être présenté sous divers conditionnements comme une solution ou un produit susceptible d'être pulvérisé. Ce dernier mode est généralement préféré.

## Revendications

1. Composition bactéricide pour la désinfection de contact en milieu hospitalier comprenant: a) un composé amphotère sur lequel sont greffés des groupes ammonium quaternaires répondant à la formule générale:

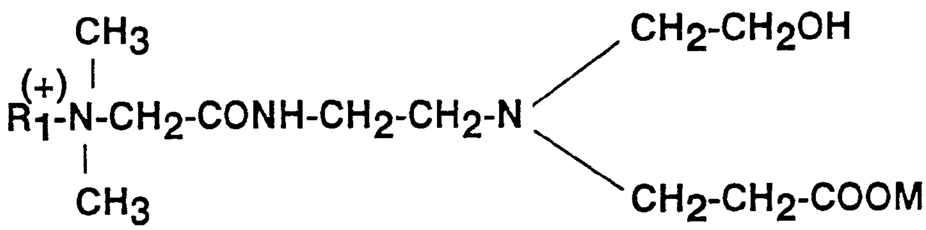

dans laquelle $R_1$ représente une chaîne d'acide gras saturé ou non saturé et M un métal alcalin et, en quantité synergique, un composé (b) de formule générale

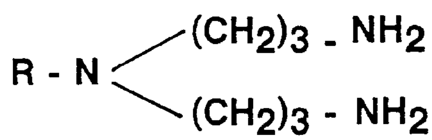

dans laquelle R est un radical alkyle en $C_8$ à $C_{20}$, le rapport pondéral de (b):(a) étant de 0,5 à 6 et voisin de 1,5.

2. Composition selon la revendication 1, caractérisée en ce que le composé (b) représente de 0,1 à 30%, de préférence, de 0,5 à 20% du poids total de la composition.

3. Composition selon l'une des revendications 1 ou 2, caractérisée en ce qu'elle comprend également au moins un alcanol inférieur (c).

4. Composition selon l'une quelconque des revendications 1 à 3, caractérisée en ce qu'elle comporte aussi (d) un composé de formule générale

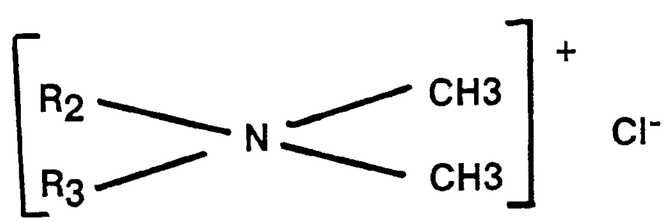

dans laquelle $R_2$ et $R_3$ sont des groupes alkyles en $C_1$ à $C_{15}$.

**5.** Composition selon la revendication 3, caractérisée en ce que le composé (c) est utilisé à raison de 5 à 50%, de préference de 10 à 30% du poids total de la composition.

**6.** Composition selon la revendication 4, caractérisée en ce que le composé (d) est utilisé à raison de 0,1 à 30%, de préférence, de 0,2 à 20% du poids total de la composition.

**7.** Composition selon l'une quelconque des revendications 1 à 6, caractérisée en ce que le composé (b) est la N,N-bis-(3-aminopropyldodécylamine).

**8.** Composition selon l'une des revendications 3 ou 5, caractérisée en ce que l'alcanol inférieur est l'éthanol ou l'isopropanol ou un mélange de ceux-ci.

**9.** Composition selon l'une des revendications 4 ou 6, caractérisée en ce que le composé (d) est le chlorure de didécyl-diméthylammonium.

**10.** Composition selon l'une quelconque des revendications 1 à 9, caractérisée en ce que le composé (a) est la N[N'(N"-2-hydroxyéthyl-N"-carboxyéthylaminoéthyl)amidoacétate]-N,N-diméthyl-N-cocoammonium bétaïne.

**11.** Composition selon l'une quelconque des revendications 1 à 10, caractérisée en ce qu'elle contient de l'eau déminéralisée.

**12.** Composition selon l'une quelconque des revendications 1 à 11, caractérisée en ce qu'elle renferme:
- N[N'(N"-2-hydroxyéthyl-N"-carboxyéthylamino-éthyl)-amidoacétate]-N,N'-diméthyl-N-coco-ammonium bétaïne 0,3%
- N-N bis(3-aminopropyldodécylamine) 2%
- Ethanol-isopropanol 30%
- Chlorure de didécyl-diméthylammonium 0,2%
- Eau déminéralisée quantité suffisante pour 100%

Office européen des brevets

# RAPPORT DE RECHERCHE EUROPEENNE

Numero de la demande

EP 93 40 0110

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.5 ) |
| A | EP-A-0 343 605 (LONZA)<br>--- | | A01N37/44<br>//(A01N37/44,33:04) |
| A | DE-A-3 528 209 (FRESENIUS)<br>----- | | |
| | | | DOMAINES TECHNIQUES RECHERCHES (Int. Cl.5 ) |
| | | | A01N |

Le présent rapport a été établi pour toutes les revendications

| Lieu de la recherche | Date d'achèvement de la recherche | Examinateur |
|---|---|---|
| LA HAYE | 09 MARS 1993 | DECORTE D.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)